# EUROPÄISCHE PATENTSCHRIFT

(11) **EP 0 326 972 B1**
(45) Veröffentlichungstag und Bekanntmachung des Hinweises auf die Patenterteilung: **31.08.1994**
(21) Anmeldenummer: 89101485.4
(22) Anmeldetag: 28.01.1989
(51) Int. Cl.: C08J 3/03, C08L 77/08, C09J 177/08, C09J 177/12

(54) **Wässrige Dispersionen auf Basis von thermoplastischen Polyamiden und Emulgatoren sowie ihre Verwendung als Klebstoffe**
Water dispersions of thermoplastic polyamides and emulsifiers and their use as adhesives
Dispersions aqueuses de polyamides thermoplastiques et d'émulsifiants et leur application comme adhésifs

(30) Priorität: 05.02.1988 DE 3803524
(43) Veröffentlichungstag der Anmeldung: 09.08.1989
(73) Patentinhaber: Henkel Kommanditgesellschaft auf Aktien, 40191 Düsseldorf (DE)
(72) Erfinder: Klauck, Wolfgang, Dr., D-4005 Meerbusch 2 (DE); Gierenz, Gerhard, Dr., D-5650 Solingen 19 (DE); Wichelhaus, Jürgen, Dr., D-5600 Wuppertal 1 (DE)

(56) Entgegenhaltungen:
- EP-A- 61 119
- Römpps Chemie Lexikon, 8. Auflage,1983, S. 2177 ("Kolophonium") und S. 1638 ("Harzseifen"), Franckh'sche Verlagshandlung, Stuttgart.
- DATABASE WPIL, no 83-60871k, Derwent Publications Ltd, London, GB; & SU-A-948947
- CHEMICAL PATENTS INDEX BASIC ABSTRACTS JOURNAL, Section A, PLASDOC, Derwent Publications Ltd, London, GB; & RO-A-93823

## Beschreibung

Die Erfindung betrifft wäßrige Dispersionen auf Basis von thermoplastischen Polyamiden mit Schmelzpunkten von mindestens 120°C bzw. Gemischen thermoplastischer Polyamide, in denen mindestens ein Polyamid einen Schmelzpunkt von mindestens 120°C aufweist, Säurefunktionen enthaltenden Emulgatoren sowie anorganischen und/oder organischen Basen, wobei die Polyamide durch Kondensation von Dimerfettsäuren und Diaminen und/oder Aminoalkanolen, gegebenenfalls in Anwesenheit von Mono- oder Dicarbonsäuren, gebildet sind.

Es ist bekannt, daß Harz- und Polymerschmelzen in Verbindung mit Wasser und Emulgatoren durch Zufuhr mechanischer Energie, z.B. durch Rühren, in sogenannte Sekundärdispersionen überführt werden können. Dabei können sowohl eine Schmelze als auch Wasser vorgelegt werden; die jeweils andere Komponente wird dann langsam zugegeben. Ein typischer Vertreter dieser Polyamiddispersionen ist in der US-A-3 582 507 beschrieben. Die dort genannten Polyamide wurden durch Kondensation von polymeren Fettsäuren, insbesondere dimeren Fettsäuren, mit Diaminen bzw. Alkanolaminen erhalten. Als Emulgator für diese Dispersionssysteme werden Homo- und Copolymere der Acrylsäure eingesetzt. Die bekannten Dispersionen besitzen jedoch keinen Tack und weisen wegen der hohen Polyamidanteile bei Raumtemperatur extrem lange Trockenzeiten auf, so daß es beim Einsatz dieser Dispersionen als Klebstoffe zunächst erforderlich ist, aus der aufgetragenen Dispersion das Wasser durch Wärmezufuhr zu entfernen. Die beschriebenen Dispersionen sind daher nur geeignet, nach der Trocknung der Filme durch Aufschmelzen des Klebstoffes als Schmelzklebstoffe eingesetzt zu werden.

Weiterhin sind aus der US-A-3 828 010 in Wasser dispergierbare Polyesteramide bekannt; schließlich betrifft die US-A-4 177 177 Emulsionen von Polyamiden aus Ölsäure und Ethylendiamin. Sämtlichen der vorgenannten Polymerdispersionen ist gemeinsam, daß sie zwar aus einer wäßrigen Dispersion auf Substratoberflächen aufgetragen werden, vor dem eigentlichen Einsatz als Klebstoff nach Art eines Schmelzklebers jedoch zunächst von dem in der Dispersion enthaltenen Wasser befreit werden müssen.

Die Erfindung ist auf sehr feinteilige Dispersionen von Polyamiden der eingangs genannten Art gerichtet, die bereits bei Raumtemperatur sowohl in Naßklebeverfahren als auch nach entsprechender Trocknungszeit im Kontaktklebeverfahren verarbeitbar sind.

Diese Aufgabe wird erfindungsgemäß dadurch gelöst, daß die wäßrigen Dispersionen der Erfindung als Emulgatoren 1 bis 250 Gew.-Teile, bezogen auf 100 Gew.-Teile Polyamide, Kolophoniumderivate mit Säurezahlen von mehr als 120 enthalten.

Mit den wäßrigen Dispersionen der Erfindung lassen sich ausgezeichnete Klebeergebnisse erzielen. Die nach dem Trocknen erhaltenen Filme lassen sich z.B. thermisch reaktivieren und ermöglichen auch Klebungen bei erhöhter Temperatur, wobei diese Temperaturen jedoch deutlich niedriger sind als die Schmelzpunkte der Polyamide. Zudem läßt sich diese Temperatur durch die Konzentration an den erfindungsgemäß einzusetzenden Kolophoniumderivaten in einem weiten Rahmen einstellen.

Die wäßrigen Dispersionen der Erfindung können hergestellt werden, indem sämtliche Komponenten in einem Rührgefäß vorgelegt und nach dem Erwärmen über den Schmelzpunkt der Polyamide kräftig vermischt werden. Dabei werden feinteilige Dispersionen erhalten, deren Aussehen von milchig-weiß bis gelartig-transparent reicht. Sie sind mit Festkörpergehalten von über 60 % herstellbar, wobei die Lagerstabilitäten bei Festkörpergehalten von 30 bis 45 % jedoch ein Maximum aufweisen. Die in den Beispielen aufgeführten Dispersionen sind mindestens 6 Monate bei Raumtemperatur lagerfähig.

Die Dispersionen der Erfindung weisen je nach Zusammensetzung eine starke Oberflächenklebrigkeit auf, die insbesondere während des Trockenvorgangs auftritt. Es werden hohe Zugscherfestigkeiten an Holz- und Kombinationsklebungen mit Kunststoffen und Metallen erreicht. Darüber ist auch ein Verkleben von nicht-entölten Metalloberflächen möglich. Durch die geringe Wasseraufnahme der in den wäßrigen Dispersionen der Erfindung enthaltenen Polyamide können nach dem Trocknen wasserfeste Filme erhalten werden, die auch als Oberflächenschutzfilme eingesetzt werden können.

Gemäß einer vorteilhaften Ausführungsform der Erfindung enthalten die wäßrigen Dispersionen Kolophoniumderivate aus der von
a) natürlichem Kolophonium mit einem Gehalt an Harzsäuren von über 70 Gew.-% und einer Säurezahl von mehr als 120, insbesondere 150 bis 170,
b) disproportioniertem Kolophonium mit einer Säurezahl von mehr als 120, insbesondere 140 bis 170,
c) hydriertem Kolophonium mit einer Säurezahl von mehr als 120, insbesondere 145 bis 170, und
d) di- bzw. polymerisiertem Kolophonium mit einer Säurezahl von mehr als 120, insbesondere 145 bis 170,
gebildeten Gruppe.

Die vorstehend genannten Kolophoniumderivate sind im Handel erhältlich.

Gemäß einer weiteren vorteilhaften Ausführungsform der Erfindung weisen die wässrigen Dispersionen Emulgatoren und Polyamide in Gewichtsverhältnissen zueinander von 70:30 bis 20:80, insbesondere von 55:45 bis 25:75 auf. Der bevorzugte Gesamtgehalt der Dispersionen an Emulgatoren und Polyamiden beträgt 20 - 60, insbesondere 30 - 45 Gew.-%; bei einem Gesamtgehalt unter 20 Gew.-% können die Dispersionen noch als Primer eingesetzt werden.

Beim industriellen Einsatz derartiger Dispersionen können die Emulgatorgehalte bezogen auf Polyamide, niedriger liegen, insbesondere zwischen 1 und 20 Gew.-%.

Die in den wäßrigen Dispersionen der Erfindung enthaltenen Polyamide weisen bevorzugt Schmelz- bzw. Erweichungspunkte zwischen 120 und 200°C auf. Werden Gemische mehrerer Polyamide eingesetzt, reicht es aus, wenn ein Polyamid einen Schmelzpunkt von mindestens 120°C hat; die übrigen Polyamide können dann Schmelz- bzw. Erweichungspunkte von sogar weniger als 100°C aufweisen.

Die in den wäßrigen Dispersionen der Erfindung einzusetzenden thermoplastischen Polyamide werden durch übliche Kondensation von Dimerfettsäuren und
a) Diaminen
b) Aminoalkoholen oder
c) Gemischen von a) und b),
gegebenenfalls in Anwesenheit von Mono- oder Dicarbonsäuren, erhalten, vgl. US-A-3 582 507, EP-B-00 61 118, EP-B-00 61 119, DE-A-35 04 804, 35 04 805, 35 35 735, 27 54 233 and US-A-4 218 351. Sie werden aus dimerisierten Fettsäuren, vorzugsweise Ölsäure, in Form technischer Gemische derselben, wie sie aus Fetten tierischer und/oder pflanzlicher sowie synthetischer Herkunft erhältlich sind, bzw. niedrig-Alkylestern derselben und geeigneten Aminen hergestellt. Dimere Fettsäuren enthalten herstellungsbedingt wechselnde Mengen an monomeren und/oder trimeren Fettsäuren; bevorzugt werden technische Gemische dimerer Fettsäuren, insbesondere dimere Ölsäure, die mindestens 70 Gew.-% Dimere, höchstens 15 Gew.-%, insbesondere höchstens 10 Gew.-% Trimere und bis zu 5 Gew.-% Monomere enthalten.

Gemäß einer weiteren vorteilhaften Ausführungsform der Erfindung enthalten die wäßrigen Dispersionen Polyamide aus
a) 20 bis 50 Mol-% dimeren Fettsäuren,
b) 0 bis 25 Mol-% Dicarbonsäuren mit 6 bis 20 Kohlenstoffatomen und
c) 20 bis 55 Mol-% Diaminen der Formel

   NH₂-R-NH₂

   wobei der Rest R ein aliphatischer, alicyclischer oder gegebenenfalls alkylsubstituierter, aromatischer Rest mit 2 bis 8 Kohlenstoffatomen bedeutet, und wobei ein Teil der Diamine durch ein Alkanolamin der Formel

   H₂N-R′-OH,

   in der R′ ein geradkettiger oder verzweigter Alkylenrest mit 2 bis 8 Kohlenstoffatomen ist, ersetzt sein kann,
hergestellt sind.

Gemäß einer weiteren vorteilhaften Ausführungsform der Erfindung enthalten die wäßrigen Dispersionen Polyamide aus
a) 35 bis 49,5 Mol-% dimeren Fettsäuren sowie
b) 0,5 bis 15 Mol-% monomeren Fettsäuren einer Kettenlänge von 6 bis 22 Kohlenstoffatomen und
c) 2 bis 35 Mol-% Polyetherdiaminen der allgemeinen Formel

   H₂N-R₁-O-(RO)ₓ-R₂-NH₂,

   in der x eine Zahl zwischen 8 und 80, vornehmlich zwischen 8 und 40, R₁ und R₂ gleiche oder verschiedene aliphatische und/oder cycloaliphatische Kohlenwasserstoffreste und R einen gegebenenfalls verzweigten aliphatischen Kohlenwasserstoffrest mit 1 bis 6 Kohlenstoffatomen darstellt sowie
d) 15 bis 48 Mol-% aliphatischen Diaminen mit 2 bis 40 Kohlenstoffatomen im C-Gerüst
   sowie gegebenenfalls
e) 2 - 14 Mol-% aliphatischen Dicarbonsäuren mit 4 - 10 Kohlenstoffatomen im Molekül,
hergestellt sind.

Besonders bevorzugt sind Polyamide, die aus
a) 35 bis 49,5 Mol-% dimeren Fettsäuren,
b) 0,5 bis 15 Mol-% monomeren Fettsäuren mit 4 bis 22, insbesondere 6 bis 10 Kohlenstoffatomen,
c) 4 bis 10 Mol-% Polyetherdiaminen und
d) 40 bis 46 Mol-% aliphatischen Diaminen
sowie gegebenenfalls
e) 2 - 14 Mol-% aliphatischen Dicarbonsäuren mit 4 - 10 Kohlenstoffatomen im Molekül
hergestellt sind, insbesondere aus
a) dimeren Fettsäuren mit einem Dimergehalt oberhalb 70 % sowie
b) 2 bis 10 Gew.-%, bezogen auf dimere Fettsäuren, an Fettsäuren mit 16/18 C-Atomen,
c) Bis-(3-aminopropyl)-polytetrahydrofuran mit einem Zahlenmittel der Molmassen zwischen 700 und 1500 und/oder Bis-(3-aminopropyl)-polyoxypropylen mit einem Zahlenmittel der Molmassen zwischen 1200 und 2500 sowie
d) Diaminoethan, 1,3-Diaminopropan, 1,4-Diaminobutan und/oder Dimeraminen mit dem C-Gerüst dimerer Fettsäuren.

Gemäß einer weiteren vorteilhaften Ausführungsform der Erfindung enthalten die wäßrigen Dispersionen Polyamide, die aus
a) 25 bis 50 Mol-% Dimerfettsäuren, die ggf. einen Gehalt an Trimerfettsäuren bis zu 10 Mol-%, insbesondere bis zu 5 Mol-%, jeweils bezogen auf Dimerfettsäuren, aufweisen,
b) 0 bis 25 Mol-% aliphatischen Dicarbonsäuren mit 6 bis 22 C-Atomen,
c) 20 bis 55 Mol-% aliphatischen, aromatischen und/oder cyclischen Diaminen mit 2 bis 40 C-Atomen aus der Gruppe der di-primären Diamine, der sekundäre Aminogruppen enthaltenden Diamine mit Alkylsubstituenten mit nicht mehr als 8 C-Atomen am N-Atom und/oder der zur zweifachen Amidbildung befähigten heterocyclischen Diamine, sowie gegebenenfalls
d) 5 bis 25 Mol-%, wenigstens einseitig N-Alkyl-substituierten, zur zweifachen Amidbildung befähigten aliphatischen Diamine mit 2 bis 10 C-Atomen und 10 bis 25 C-Atomen im geradkettig oder verzweigten N-Alkylrest,
hergestellt sind.

Es können auch Mischungen der vorgenannten verschiedenen Polyamide in den wäßrigen Dispersionen der Erfindung eingessetzt werden. Polyamide auf Dimerfettsäurebasis mit Erweichungspunkten von unter 120°C können ebenfalls verwendet werden, wenn gleichzeitig ein oder mehrere Polyamide auf Dimerfettsäurebasis mit Erweichungspunkten von mindestens 120°C zugesetzt werden, wobei dann der Anteil der höherschmelzenden Polyamide, bezogen auf die niedrigerschmelzenden, vorzugsweise mindestens etwa 20 Gew-% beträgt.

Gemäß einer weiteren vorteilhaften Ausführungsform der Erfindung weisen die Polyamide Säurezahlen von 1 bis 30 bzw. Aminzahlen von 1 bis 35 auf.

Die in den wäßrigen Dispersionen der Erfindung enthaltenen anorganischen und/oder organischen Basen bilden mit den erfindungsgemäß einzusetzenden Kolophoniumderivaten Salze. Bevorzugt werden anorganische Basen aus der von Hydroxiden und Carbonaten des Lithiums, Natriums und Kaliums gebildeten Gruppe und/oder organische Basen aus der von Hydrazin, Ethanolamin, Diethanolamin, Triethanolamin, Morpholin, Diaminoethan und 2,6-Lutidin gebildeten Gruppe eingesetzt.

Zur Herstellung der wäßrigen Dispersionen der Erfindung muß mindestens 1 % durch die zugegebenen Basen verseiftes Kolophoniumharz, bezogen auf den Festkörpergehalt der Dispersion, vorliegen. Bei höheren Emulgatorgehalten, z.B. 40 %, können die Restmengen (also 39 %) zu 0 bis 100 % verseift sein. Mit zunehmenden Verseifungsgrad nimmt die Feinteiligkeit der Dispersionen und die Wärmebeständigkeit der Klebungen zu.

Die wäßrigen Dispersionen können der Erfindung zusätzlich in Wasser schwer lösliche Weichmacher, insbesondere propoxylierte Fettsäuren, sowie Wachse, Alterungsschutzmittel, Pigmente und/oder Füllstoffe sowie weitere übliche, dem Fachmann geläufige Additive enthalten.

Die Erfindung betrifft weiterhin die Verwendung der beanspruchten wäßrigen Dispersionen als Klebstoffe oder Beschichtungsmassen.

Die Erfindung wird im folgenden anhand bevorzugter Ausführungsformen näher erläutert.

Herstellung typischer Vertreter von für den Erfindungsgegenstand geeigneten Polyamiden.

| Polyamid A: | |
|---|---|
| Dimerfettsäure auf Basis Ölsäure (Monomergehalt 1 Gew.-%, Trimergehalt 4 Gew.-%) | 28,1 Gew.-% |
| Azelainsäure | 22,3 Gew.-% |
| Ethylendiamin | 12,4 Gew.-% |
| Piperazin | 37,2 Gew.-% |
| | 100,0 Gew.-% |
| Erweichungspunkt | ca. 138°C |
| Säurezahl | ca. 8,0 |
| Aminzahl | ca. 0,1 |

| Polyamid B: | |
|---|---|
| Dimerfettsäure auf Basis Ölsäure (Monomergehalt 1 Gew.-%, Trimergehalt 4 Gew.-%) | 74,9 Gew.-% |
| Stearinsäure | 5,6 Gew.-% |
| Diaminoethan | 7,8 Gew.-% |
| Bis-(3-aminopropyl)-polytetrahydrofuran (MG 1100) | 11,7 Gew.-% |
| | 100,0 Gew.-% |
| Erweichungspunkt | ca. 155°C |
| Säurezahl | 7,6 |
| Aminzahl | 1,0 |

| Polyamid C: | |
|---|---|
| Dimerfettsäure auf Basis Ölsäure (Monomergehalt 1 Gew.-%, Trimergehalt 4 Gew.-%) | 76,4 Gew.-% |
| Azelainsäure | 5,2 Gew.-% |
| Ethylendiamin | 7,6 Gew.-% |
| N-Alkyl-propylendiamin (Alkylrest entspricht in Kettenlänge und Verteilung der Tallölfettsäure) | 10,8 Gew.-% |
| | 100,0 Gew.-% |
| Erweichungspunkt | 140°C |
| Säurezahl | 0,1 |
| Aminzahl | 3,2 |

| Polyamid D: | |
|---|---|
| Dimerfettsäure auf Basis Ölsäure (Monomergehalt 1 Gew.-%, Trimergehalt 4 Gew.-%) | 41,0 Gew.-% |
| Azelainsäure | 9,0 Gew.-% |
| Ethylendiamin | 50,0 Gew.-% |
| | 100,0 Gew.-% |
| Erweichungspunkt | 165°C |
| Säurezahl | 0,1 |
| Aminzahl | 3,1 |

| Polyamid E: | |
|---|---|
| wie Polymer A | 90 Gew.-% |
| Weichmacher (Sulfonamidharz, Molekulargewicht 199, Erstarrungspunkt 0°C, Säurezahl 0,40 mg KOH/g, Viskosität bei 25°C 360 cSt) | 10 Gew.-% |
| | 100,0 Gew.-% |
| Erweichungspunkt | 120°C |
| Säurezahl | 8,0 |
| Aminzahl | 0,1 |

| Polyamid F: | |
|---|---|
| Dimerfettsäure auf Basis Ölsäure (Monomergehalt 1 Gew.-%, Trimergehalt 4 Gew.-%) | 83,2 Gew.-% |
| Ethylendiamin | 7,0 Gew.-% |
| N-Alkyl-propylendiamin (Alkylrest entspricht in Kettenlänge und Verteilung der Tallölfettsäure) | 9,8 Gew.-% |
| | 100,0 Gew.-% |
| Erweichungspunkt | 100°C |
| Säurezahl | 0,1 |
| Aminzahl | 4,1 |

Typische Vertreter von für den Erfindungsgegenstand geeigneten, im Handel erhältlichen Kolophoniumderivate.

| Kolophoniumderivat A | |
|---|---|
| Hydriertes Kolophonium Säurezahl | ca. 165 |
| Verseifungszahl | ca. 167 |
| Brechungsindex (100°C) | 1,5008 |
| Dichte (20°C) | 1,045 |
| Erweichungspunkt | ca. 75°C |

| Kolophoniumderivat B | |
|---|---|
| Disproportioniertes Kolophonium Säurezahl | ca. 155 bis 170 |
| Erweichungspunkt | 65 bis 68°C |

Allgemeine Arbeitsvorschrift für die Herstellung der obengennanten Polyamide:
Die Kondensation wurde in einem entsprechend tubulierten Glaskolben unter Stickstoffatmosphäre und Rühren vorgenommen. Die vorgelegten Carbonsäuren wurden zunächst auf etwa 60°C erhitzt; anschließend wurden die weiteren Reaktionskomponenten zugegeben. Innerhalb einer Stunde wurde dann auf 230°C aufgeheizt und eine Stunde bei dieser Temperatur gehalten. Dann wurde während der nächsten Stunde bei konstanter Temperatur auf 15 mbar evakuiert. Nach Abkühlen auf 120°C wurde das Reaktionsprodukt abgelassen und zur Bestimmung der Eigenschaften bzw. Weiterverwendung isoliert.

Allgemeine Arbeitsvorschrift für die Herstellung von wäßrigen Dispersionen der Erfindung:
Die Bestandteile der Dispersion, insbesondere Polyamide, Kolophoniumderivate, Basen und Wasser werden in einem Druckgefäß vorgelegt und bei einer den Schmelzpunkt des Polyamids um 10°C übersteigenden Temperatur 10 min kräftig gerührt.

In der folgenden Tabelle I sind wäßrige Dispersionen der Erfindung (Beispiele 1 bis 5 und 7 bis 12) aufgeführt. Eingesetzte Polyamide und Emulgatoren (Kolophoniumderivate) sind mit den oben verwendeten Buchstaben gekennzeichnet. In allen Fällen, ausgenommen desjenigen des nicht zur Erfindung gehörenden Beispiels 6, wurden feinteilige Dispersionen erhalten. Im Beispiel 6 wurde das Polyamid F eingesetzt, das einen Erweichungspunkt unterhalb von 120°C aufweist; es ergibt keine Dispersion. Dennoch können das Polyamid F enthaltene Dispersionen hergestellt werden, indem man es zusammen mit einem anderen Polyamid mit einem Erweichungspunkt von mindestens 120°C einsetzt, vgl. die Beispiele 11 und 12.

**Tabelle I**

| Beispiel Nr. | Polyamid (Menge, g) | Emulgator (Menge, g) | Base (Menge, g) | Wasser (g) |
|---|---|---|---|---|
| 1 | A(200) | A(130) | LiOH(5,5) | 400 |
| 2 | B(200) | A(130) | NaOH(7) | 400 |
| 3 | C(200) | B(120) | KOH(10) | 400 |
| 4 | D(200) | A(140) | NaOH(10) | 400 |
| 5 | E(200) | B(130) | NaOH(10) | 400 |
| 6 | F(200) | B(130) | NaOH(10) | 400 |
| 7 | A(200) | A(20) | NaOH(2,2) | 300 |
| 8 | A(200) | A(400) | NaOH(20) | 600 |
| 9 | A(200) | A(130) | EA¹⁾(17) | 400 |
| 10 | A(100) | A(130) | NaOH(10) | 350 |
| | D(100) | | | |
| 11 | A(120) | A(130) | NaOH(10) | 400 |
| | F(80) | | | |
| 12 | A(100) | B(130) | NaOH(10) | 400 |
| | F(100) | | | |

| | | | | |
|---|---|---|---|---|
| 1) Ethanolamin | | | | |

Zur Ermittlung der Zugscherfestigkeiten der mit den wäßrigen Dispersionen der Erfindung erhaltenen Klebungen wurden Prüfkörper mit Abmessungen von 5 x 10 x 0,5 cm verwendet; die Überlappungslänge betrug 2 cm. Die Prüfkörper (außer Holz) wurden leicht angeschliffen und nach der Verklebung bei Raumtemperatur 6 Tage mit Wäscheklammern fixiert sowie anschließend zerrissen. Die erreichten Zugscherfestigkeiten sind in der folgenden Tabelle II zusammengefaßt und stellen Mittelwert aus 6 Messungen dar.

**Tabelle II**

| Zugscherfestigkeiten (in N/mm²) | | | | | | | | | | | | |
|---|---|---|---|---|---|---|---|---|---|---|---|---|
| Beisp. Nr. | 1 | 2 | 3 | 4 | 5 | 6 | 7 | 8 | 9 | 10 | 11 | 12 |
| Holz/Holz | 8,0 | 7,0 | 6,8 | 7,2 | 6,1 | - | 3,0 | 1,2 | 7,8 | 8,0 | 6,5 | 6,8 |
| Holz/PVC | 4,6 | 3,9 | 3,8 | 4,0 | 4,7 | - | 2,0 | 1,0 | 4,2 | 4,5 | 3,5 | 3,2 |
| Holz/ABS | 4,0 | 3,8 | 3,7 | 3,9 | 3,5 | - | 1,5 | 1,0 | 4,4 | 4,1 | 3,3 | 3,6 |
| Holz/ALU | 7,6 | 4,8 | 3,6 | 6,0 | 4,8 | - | 1,3 | 1,1 | 6,0 | 6,5 | 5,3 | 4,9 |
| Holz/FE | 8,9 | 7,0 | 5,0 | 6,1 | 5,2 | - | 1,5 | 1,0 | 6,0 | 7,6 | 5,6 | 4,9 |

## Patentansprüche

1. Wäßrige Dispersionen auf Basis von thermoplastischen Polyamiden mit Schmelzpunkten von mindestens 120°C bzw. Gemischen thermoplastischer Polyamide, in denen mindestens ein Polyamid einen Schmelzpunkt von mindestens 120°C aufweist, Säurefunktionen enthaltenden Emulgatoren sowie anorganischen und/oder organischen Basen, wobei die Polyamide durch Kondensation von Dimerfettsäuren und
a) Diaminen
b) Aminoalkanolen oder
c) Gemischen von a) und b),
gegebenenfalls in Anwesenheit von Mono- und/oder Dicarbonsäuren, gebildet sind, dadurch gekennzeichnet, daß sie als Emulgatoren 1 bis 250 Gew.-Teile, bezogen auf 100 Gew.-Teile Polyamid, Kolophoniumderivate mit Säurezahlen von mehr als 120 enthalten.

2. Wäßrige Dispersionen nach Anspruch 1, dadurch gekennzeichnet, daß die Kolophoniumderivate aus der von
a) natürlichem Kolophonium mit einem Gehalt an Harzsäuren von über 70 Gew.-% und einer Säurezahl von mehr als 120, insbesondere 150 bis 170,
b) disproportioniertem Kolophonium mit einer Säurezahl von mehr als 120, insbesondere 140 bis 170,
c) hydriertem Kolophonium mit einer Säurezahl von mehr also 120, insbesondere 145 bis 170, und
d) di- bzw. polymerisiertem Kolophonium mit einer Säurezahl von mehr als 120, insbesondere 145 bis 170,
gebildeten Gruppe ausgewählt sind.

3. Wäßrige Dispersionen nach Anspruch 1 oder 2, gekennzeichnet durch einen Gehalt an Emulgatoren und Polyamiden zueinander in Gewichtsverhältnissen von 70:30 bis 20:80, insbesondere von 55:45 bis 25:75.

4. Wäßrige Dispersionen nach mindestens einem der Ansprüche 1 bis 3, gekennzeichnet durch einen Gesamtgehalt von Emulgatoren und Polyamiden von 20 bis 60, insbesondere 30 - 45 Gew.-%.

5. Wäßrige Dispersionen nach mindestens einem der Ansprüche 1 bis 4, dadurch gekennzeichnet, daß die Polyamide Schmelzpunkte zwischen 120 und 200°C aufweisen.

6. Wäßrige Dispersionen nach mindestens einem der Ansprüche 1 bis 5, dadurch gekennzeichnet, daß die Polyamide als Dimerfettsäurekomponente dimerisierte Ölsäure mit einem Dimergehalt von mindestens 70 Gew.-%, einem Trimergehalt von höchstens 15, insbesondere 10 Gew.-% und einen Monomergehalt von höchstens 5 Gew.-% enthalten.

7. Wäßrige Dispersionen nach mindestens einem der Ansprüche 1 bis 6, dadurch gekennzeichnet, daß die Polyamide aus
a) 20 bis 50 Mol-% dimeren Fettsäuren,
b) 0 bis 25 Mol-% Dicarbonsäuren mit 6 bis 20 Kohlenstoffatomen und
c) 20 bis 55 Mol-% Diaminen der Formel
NH2-R-NH2,
wobei der Rest R ein aliphatischer, alicyclischer oder gegebenenfalls alkylsubstituierter, aromatischer Rest mit 2 bis 8 Kohlenstoffatomen bedeutet, und wobei ein Teil der Diamine durch ein Alkanolamin der Formel
H2N-R′-OH,
in der R′ ein geradkettiger oder verzweigter Alkylenrest mit 2 bis 8 Kohlenstoffatomen ist,
ersetzt sein kann,
hergestellt sind.

8. Wäßrige Dispersionen nach mindestens einem der Ansprüche 1 bis 6, dadurch gekennzeichnet, daß die Polyamide aus
a) 35 bis 49,5 Mol-% dimeren Fettsäuren sowie
b) 0,5 bis 15 Mol-% monomeren Fettsäuren einer Kettenlänge von 6 bis 22 Kohlenstoffatomen und
c) 2 bis 35 Mol-% Polyetherdiaminen der allgemeinen Formel
H2N-R1-O-(RO)x-R2-NH2,
in der eine Zahl zwischen 8 und 80, vornehmlich zwischen 8 und 40, R1 und R2 gleiche oder verschiedene aliphatische und/oder cycloaliphatische Kohlenwasserstoffreste und R einen gegebenenfalls verzweigten aliphatischen Kohlenwasserstoffrest mit 1 bis 6 Kohlenstoffatomen darstellt sowie
d) 15 bis 48 Mol-% aliphatischen Diaminen mit 2 bis 40 Kohlenstoffatomen im C-Gerüst
sowie gegebenenfalls
e) 2 - 14 Mol-% aliphatischen Dicarbonsäuren mit 4 - 10 Kohlenstoffatomen im Molekül,
hergestellt sind.

9. Wäßrige Dispersionen nach Anspruch 8, dadurch gekennzeichnet, daß die Polyamide aus
a) 35 bis 49,5 Mol-% dimeren Fettsäuren,
b) 0,5 bis 15 Mol-% monomeren Fettsäuren mit 4 bis 22, insbesondere 6 bis 10 Kohlenstoffatomen,
c) 4 bis 10 Mol-% Polyetherdiaminen und
d) 40 bis 46 Mol-% aliphatischen Diaminen
sowie gegebenenfalls
e) 2 - 14 Mol-% aliphatischen Dicarbonsäuren mit 4 - 10 Kohlenstoffatomen im Molekül
hergestellt sind.

10. Wäßrige Dispersionen nach mindestens einem der Ansprüche 1 bis 6, dadurch gekennzeichnet, daß die Polyamide aus
a) dimeren Fettsäuren mit einem Dimergehalt oberhalb 70 % sowie
b) 2 bis 10 Gew.-%, bezogen auf dimere Fettsäuren, an Fettsäuren mit 16/18 C-Atomen,
c) Bis-(3-aminopropyl)-polytetrahydrofuran mit einem Zahlenmittel der Molmassen zwischen 700 und 1500 und/oder Bis-(3-aminopropyl)-polyoxypropylen mit einem Zahlenmittel der Molmassen zwischen 1200 und 2500 sowie
d) Diaminoethan, 1,3-Diaminopropan, 1,4-Diaminobutan und/oder Dimeraminen mit dem C-Gerüst dimerer Fettsäuren
hergestellt sind.

11. Wäßrige Dispersionen nach mindestens einem der Ansprüche 1 bis 6, dadurch gekennzeichnet, daß die Polyamide aus
a) 25 bis 50 Mol-% Dimerfettsäuren, die ggf. einen Gehalt an Trimerfettsäuren bis zu 10 Mol-%, insbesondere bis zu 5 Mol-%, jeweils bezogen auf Dimerfettsäuren, aufweisen,
b) 0 bis 25 Mol-% aliphatischen Dicarbonsäuren mit 6 bis 22 C-Atomen,
c) 20 bis 55 Mol-% aliphatischen, aromatischen und/oder cyclischen Diaminen mit 2 bis 40 C-Atomen aus der Gruppe der di-primären Diamine, der sekundäre Aminogruppen enthaltenden Diamine mit Alkylsubstituenten mit nicht mehr als 8 C-Atomen am N-Atom und/oder der zur zweifachen Amidbildung befähigten heterocyclischen Diamine, sowie gegebenenfalls
d) 5 bis 25 Mol-%, wenigstens einseitig N-Alkyl-substituierten, zur zweifachen Amidbildung befähigten aliphatischen Diamine mit 2 bis 10 C-Atomen und 10 bis 25 C-Atomen im geradkettig oder verzweigten N-Alkylrest,
hergestellt sind.

12. Wäßrige Dispersionen nach mindestens einem der Anprüche 1 bis 11, dadurch gekennzeichnet, daß die Polyamide Säurezahlen von 1 - 30 bzw. Aminzahlen von 1 - 35 aufweisen.

13. Wäßrige Dispersionen nach mindestens einem der Ansprüche 1 bis 12, dadurch gekennzeichnet, daß sie an organische Basen aus der von Hydroxiden und Carbonaten des Lithiums, Natriums und Kaliums gebildeten Gruppe und/oder organische Basen aus der von Hydrazin, Ethanolamin, Diethanolamin, Triethanolamin, Morpholin, Diaminoethan und 2,6-Lutidin gebildeten Gruppe enthalten.

14. Wäßrige Dispersionen nach mindestens einem der Ansprüche 1 bis 13, dadurch gekennzeichnet, daß sie zusätzlich in Wasser schwerlösliche Weichmacher, insbesondere propoxylierte Fettsäuren, Wachse, Alterungsschutzmittel, Pigmente und/oder Füllstoffe enthalten.

15. Verwendung der wäßrigen Dispersionen nach mindestens einem der Ansprüche 1 bis 14 als Klebstoffe bzw. Beschichtungsmassen.

## Claims

1. Aqueous dispersions based on thermoplastic polyamides having melting points of at least 120°C or on mixtures of thermoplastic polyamides, in which at least one polyamide has a melting point of at least 120°C, emulsifiers containing acid functions and inorganic and/or organic bases, the polyamides being formed by condensation of dimeric fatty acids and
a) diamines,
b) aminoalkanols or
c) mixtures of a) and b),
optionally in the presence of mono- and/or dicarboxylic acids, characterized in that they contain as emulsifiers 1 to 250 parts by weight, based on 100 parts by weight polyamide, of colophony derivatives having acid values of more than 120.

2. Aqueous dispersions as claimed in claim 1, characterized in that the colophony derivatives are selected from the group formed by
a) natural colophony containing more than 70% by weight resinic acids and having an acid value of more than 120 and more especially from 150 to 170,
b) disproportionated colophony having an acid value of more than 120 and more especially from 140 to 170,
c) hydrogenated colophony having an acid value of more than 120 and more especially from 145 to 170 and
d) dimerized or polymerized colophony having an acid value of more than 120 and more especially from 145 to 170.

3. Aqueous dispersions as claimed in claim 1 or 2, characterized by a content of emulsifiers and polyamides in ratios by weight to one another of from 70:30 to 20:80 and more especially from 55:45 to 25:75.

4. Aqueous dispersions as claimed in any of claims 1 to 3, characterized by a total content of emulsifiers and polyamides of from 20 to 60% by weight and more especially from 30 to 45% by weight.

5. Aqueous dispersions as claimed in at least one of claims 1 to 4, characterized in that the polyamides have melting points of from 120 to 200°C.

6. Aqueous dispersions as claimed in any of claims 1 to 5, characterized in that the polyamides contain as dimeric fatty acid component dimerized oleic acid having a dimer content of at least 70% by weight, a trimer content of at most 15% by weight, more especially 10% by weight, and a monomer content of at most 5% by weight.

7. Aqueous dispersions as claimed in at least one of claims 1 to 6, characterized in that the polyamides are prepared from
a) 20 to 50 mol-% dimeric fatty acids,
b) 0 to 25 mol-% dicarboxylic acids containing 6 to 20 carbon atoms and
c) 20 to 55 mol-% diamines corresponding to the following formula
NH-₂-R-NH₂
in which R is an aliphatic, alicyclic or optionally alkyl-substituted aromatic radical containing 2 to 8 carbon atoms,
the diamines being partially replaceable by an alkanolamine corresponding to the following formula
H₂N-R'-OH
in which R' is a straight-chain or branched alkylene radical containing 2 to 8 carbon atoms.

8. Aqueous dispersions as claimed in at least one of claims 1 to 6, characterized in that the polyamides are prepared from
a) 35 to 49.5 mol-% dimeric fatty acids,
b) 0.5 to 15 mol-% monomeric fatty acids containing 6 to 22 carbon atoms and
c) 2 to 35 mol-% polyether diamines corresponding to the following general formula
H₂N-R₁-O-(RO)ₓ-R₂-NH₂,
in which x is a number of from 8 to 80, mainly from 8 to 40, R₁ and R₂ may be the same or different and represent aliphatic and/or cycloaliphatic hydrocarbon radicals and R is an optionally branched aliphatic hydrocarbon radical containing 1 to 6 carbon atoms,
d) 15 to 48 mol-% aliphatic diamines containing 2 to 40 carbon atoms in the C chain and, optionally,
e) 2 to 14 mol-% aliphatic dicarboxylic acids containing 4 to 10 carbon atoms in the molecule.

9. Aqueous dispersions as claimed in claim 8, characterized in that the polyamides are prepared from
a) 35 to 49.5 mol-% dimeric fatty acids,
b) 0.5 to 15 mol-% monomeric fatty acids containing 4 to 22 and more especially 6 to 10 carbon atoms,
c) 4 to 10 mol-% polyether diamines and
d) 40 to 46 mol-% aliphatic diamines
and, optionally,
e) 2 to 14 mol-% aliphatic dicarboxylic acids containing 4 to 10 carbon atoms in the molecule.

10. Aqueous dispersions as claimed in at least one of claims 1 to 6, characterized in that the polyamides are prepared from
a) dimeric fatty acids having a dimer content above 70%,
b) 2 to 10% by weight, based on dimeric fatty acids, of fatty acids containing 16 to 18 carbon atoms,
c) bis-(3-aminopropyl)-polytetrahydrofuran having a number average molecular weight of 700 to 1500 and/or bis-(3-aminopropyl)-polyoxypropylene having a number average molecular weight of 1200 to 2500,
d) diaminoethane, 1,3-diaminopropane, 1,4-diaminobutane and/or dimer amines having the C chain of dimeric fatty acids.

11. Aqueous dispersions as claimed in at least one of claims 1 to 6, characterized in that the polyamides are prepared from
a) 25 to 50 mol-% dimeric fatty acids optionally containing up to 10 mol-% and more especially up to 5 mol-%, based on dimeric fatty acids, of trimeric fatty acids,
b) 0 to 25 mol-% aliphatic dicarboxylic acids, containing 6 to 22 carbon atoms,
c) 20 to 55 mol-% aliphatic, aromatic and/or cyclic diamines containing 2 to 40 carbon atoms from the group of diprimary diamines, diamines containing secondary amino groups and bearing alkyl substituents with no more than 8 carbon atoms at the nitrogen atom and/or heterocyclic diamines capable of double amide formation and, optionally,
d) 5 to 25 mol-% aliphatic diamines containing 2 to 10 carbon atoms which are N-alkyl-substituted on at least one side and which are capable of double amide formation, containing 10 to 25 carbon atoms in the linear or branched N-alkyl radical.

12. Aqueous dispersions as claimed in at least one of claims 1 to 11, characterized in that the polyamides have acid values of 1 to 30 and amine values of 1 to 35.

13. Aqueous dispersions as claimed in at least one of claims 1 to 12, characterized in that they contain inorganic bases from the group consisting of hydroxides and carbonates of lithium, sodium and potassium and/or organic bases from the group consisting of hydrazine, ethanolamine, diethanolamine, triethanolamine, morpholine, diaminoethane and 2,6-lutidine.

14. Aqueous dispersions as claimed in at least one of claims 1 to 13, characterized in that they additionally contain plasticizers poorly soluble in water, particularly propoxylated fatty acids, waxes, antiagers, pigments and/or fillers.

15. The use of the aqueous dispersions claimed in at least one of claims 1 to 14 as adhesives or coating compositions.

## Revendications

1. Dispersions aqueuses à base de polyamides thermoplastiques, présentant un point de fusion d'au moins 120 °C ou de mélanges de polyamides thermoplastiques, dans lesquels au moins un polyamide présente un point de fusion d'au moins 120 °C, d'émulsifiants renfermant des fonctions acides et de bases inorganiques et/ou organiques, les polyamides étant formés par condensation d'acides gras dimères et a) de diamines, b) d'aminoalcanols ou c) de mélanges de a) et de b), éventuellement en présence d'acides mono- et/ou dicarboxyliques, caractérisées en ce qu'elles contiennent comme émulsifiants 1 à 250 parties en poids, pour 100 parties en poids de polyamide, de dérivés de colophane présentant un indice d'acidité supérieur à 120.

2. Dispersions aqueuses selon la revendication 1, caractérisées en ce que les dérivés de colophane sont sélectionnés parmi le groupe constitué de la
a) colophane naturelle présentant une concentration en acides résiniques supérieure à 70 % en poids et un indice d'acidité supérieur à 120, en particulier de 150 à 170,
b) colophane disproportionnée possédant un indice d'acidité supérieur à 120, en particulier de 140 à 170,
c) colophane hydrogénée présentant un indice d'acidité supérieur à 120, en particulier de 145 à 170, et de la
d) colophane di- ou polymérisée possédant un indice d'acidité supérieur à 120, en particulier de 145 à 170.

3. Dispersions aqueuses selon la revendication 1 ou 2, caractérisées par une concentration des émulsifiants et des polyamides entre eux, en rapports pondéraux de 70:30 à 20:80, en particulier de 55:45 à 25:75.

4. Dispersions aqueuses selon au moins une des revendications 1 à 3, caractérisées par une concentration totale en émulsifiants et en polyamides de 20 à 60, en particulier de 30 à 45 % en poids.

5. Dispersions aqueuses selon au moins une des revendications 1 à 4, caractérisées en ce que les polyamides présentent un point de fusion de 120 à 200 °C.

6. Dispersions aqueuses selon au moins une des revendications 1 à 5, caractérisées en ce que les polyamides renferment comme composant acide gras dimère, de l'acide oléique dimérisé présentant une concentration en dimère d'au moins 70 % en poids, une teneur en trimère de maximum 15, en particulier 10 % en poids et une concentration en monomère de maximum 5 % en poids.

7. Dispersions aqueuses selon au moins une des revendications 1 à 6, caractérisées en ce que les polyamides sont fabriqués à partir de
a) 20 à 50 moles % d'acides gras dimères,
b) 0 à 25 moles % d'acides dicarboxyliques comportant 6 à 20 atomes de carbone, et de
c) 20 à 55 moles % de diamines de la formule
NH₂-R-NH₂,
dans laquelle R représente un radical aromatique aliphatique, alicyclique ou éventuellement à substitution alkyle, comportant 2 à 8 atomes de carbone, une partie des diamines pouvant être remplacée par une alcanolamine de la formule
H₂N-R'-OH,
dans laquelle R' représente un radical alkylène à chaîne droite ou ramifiée, comportant 2 à 8 atomes de carbone.

8. Dispersions aqueuses selon au moins une des revendications 1 à 6, caractérisée en ce que les polyamides sont fabriqués à partir de
a) 35 à 49,5 moles % d'acides gras dimères, ainsi que de
b) 0,5 à 15 moles % d'acides gras monomères possédant une longueur de chaîne de 6 à 22 atomes de carbone, et de
c) 2 à 35 moles % de polyétherdiamines de la formule générale
H₂N-R¹-O-(RO)ₓ-R²⁻NH₂,
dans laquelle x représente un nombre de 8 à 80, en particulier de 8 à 40, R¹ et R² sont des radicaux hydrocarbure aliphatiques et/ou cycloaliphatiques identiques ou différents et R représente un radical hydrocarbure aliphatique éventuellement ramifié comportant 1 à 6 atomes de carbone, ainsi que de
d) 15 à 48 moles % de diamines aliphatiques dont le squelette de C comporte 2 à 40 atomes de carbone,
ainsi que le cas échéant de
e) 2 à 14 moles % d'acides dicarboxyliques aliphatiques dont la molécule comporte 4 à 10 atomes de carbone.

9. Dispersions aqueuses selon la revendication 8, caractérisées en ce que les polyamides sont fabriqués à partir de
a) 35 à 49,5 moles % d'acides gras dimères,
b) 0,5 à 15 moles % d'acides gras monomères possédant une longueur de chaîne de 4 à 22, en particulier de 6 à 10 atomes de carbone et de
c) 4 à 10 moles % de polyétherdiamines et de
d) 40 à 46 moles % de diamines aliphatiques,
ainsi que le cas échéant de
e) 2 à 14 moles % d'acides dicarboxyliques aliphatiques dont la molécule comporte 4 à 10 atomes de carbone.

10. Dispersions aqueuses selon au moins une des revendications 1 à 6, caractérisées en ce que les polyamides sont fabriqués à partir de
a) acides gras dimères présentant une teneur en dimères supérieure à 70 %, ainsi que de
b) 2 à 10 % en poids, par rapport aux acides gras dimères, d'acides gras comportant 16/18 atomes de C,
c) bis-(3-aminopropyl)-polytétrahydrofurane avec une moyenne numérique des masses molaires comprise entre 700 et 1500 et/ou de bis-(3-aminopropyl)-polyoxypropylène avec une moyenne numérique des masses molaires comprise entre 1200 et 2500, ainsi que de
d) diaminoéthane, 1,3-diaminopropane, 1,4-diaminobutane et/ou de diméramines possédant le squelette de C d'acides gras dimères.

11. Dispersions aqueuses selon au moins une des revendications 1 à 6, caractérisées en ce que les polyamides sont fabriqués à partir de
a) 25 à 50 moles % d'acides gras dimères, présentant le cas échéant une teneur en acides gras trimères allant jusqu'à 10 moles %, en particulier jusqu'à 5 moles %, dans chaque cas par rapport aux acides gras dimères,
b) 0 à 25 moles % d'acides dicarboxyliques aliphatiques comportant 6 à 22 atomes de C,
c) 20 à 55 moles % de diamines aliphatiques, aromatiques et/ou cycliques, comportant 2 à 40 atomes de C, faisant partie du groupe des diamines di-primaires, des diamines renfermant des groupes amino secondaires avec des substituants alkyle ne comportant pas plus de 8 atomes de C sur l'atome de N et/ou des diamines hétérocycliques susceptibles de formation double d'amides, ainsi que le cas échéant de
d) 5 à 25 moles % de diamines aliphatiques N-alkylsubstituées au moins unilatéralement, susceptibles de formation double d'amides, dont le radical N-alkyle à chaîne droite ou ramifiée comporte 2 à 10 atomes de C et 10 à 25 atomes de C.

12. Dispersions aqueuses selon au moins une des revendications 1 à 11, caractérisées en ce que les polyamides présentent un indice d'acidité de 1 à 30 ou un indice d'amine de 1 à 35.

13. Dispersions aqueuses selon au moins une des revendications 1 à 12, caractérisées en ce qu'elles renferment des bases inorganiques faisant partie du groupe constitué des hydroxydes et des carbonates de lithium, sodium et potassium et/ou des bases organiques appartenant au groupe constitué de l'hydrazine, de l'éthanolamine, de la diéthanolamine, de la triéthanolamine, de la morpholine, du diaminoéthane et de la 2,6-lutidine.

14. Dispersions aqueuses selon au moins une des revendications 1 à 13, caractérisées en ce qu'elle renferment en plus des plastifiants difficilement solubles dans l'eau, en particulier des acides gras propoxylés, des cires, des agents antivieillissement, des pigments et/ou des charges.

15. Utilisation des dispersions aqueuses selon au moins une des revendications 1 à 14 comme adhésifs ou comme masses d'enduction.
